# EUROPEAN PATENT SPECIFICATION

(11) **EP 3 668 073 B1**
(45) Date of publication and mention of the grant of the patent: **13.07.2022**
(21) Application number: 18306675.2
(22) Date of filing: 12.12.2018
(51) Int. Cl.: H04M 11/02, H04M 1/02, H04N 7/18

(54) **METHOD FOR ADAPTING AN ELECTRICAL CIRCUIT WITH A CONTROLLING DEVICE**
VERFAHREN ZUR ANPASSUNG EINER ELEKTRISCHEN SCHALTUNG MIT EINER STEUERUNGSVORRICHTUNG
PROCÉDÉ D'ADAPTATION D'UN CIRCUIT ÉLECTRIQUE À L'AIDE D'UN DISPOSITIF DE COMMANDE

(43) Date of publication of application: 17.06.2020
(73) Proprietor: Netatmo, 92100 Boulogne Billancourt (FR)
(72) Inventor: NADAL, Eric, 75003 PARIS (FR); THIBAULT, Vincent, 75010 PARIS (FR); CAZALIS, Romain, 78220 VIROFLAY (FR)
(74) Representative: Marks & Clerk France

(56) References cited:
- US-A1- 2018 278 734

## Description

### FIELD

The invention relates to the field of electrical circuit and concerns a method for adapting an electrical circuit energized by a first voltage power supply with a controlling device for installing a second user device configured to be energized by a second voltage power supply.

### BACKGROUND

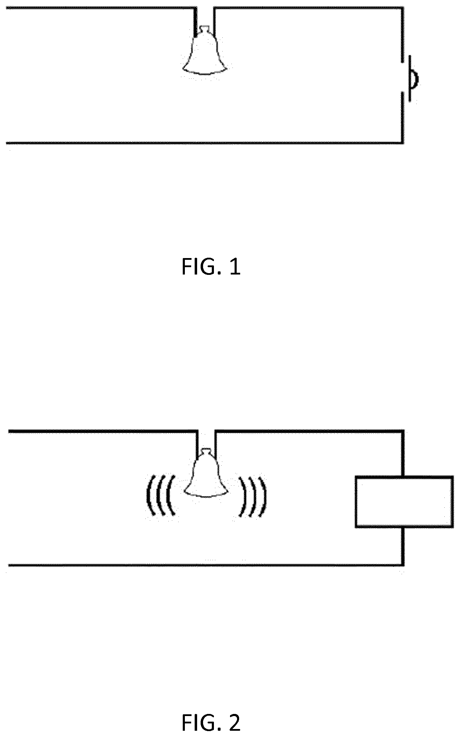

Traditional houses or buildings are equipped with a chime connected in series with a button, as represented in Figure 1. When the button is released, the electrical circuit is open and no current flows. The chime remains silent. When a visitor presses on the button to announce his/her arrival at the door of the house or building, the electrical circuit is closed, some current flows through the electrical circuit and the chime rings.

In order to increase the security and the accessibility of his/her house, a user may prefer to have a smart doorbell instead of a simple one-button mechanism. Such a smart doorbell is an electronic device that may comprise a camera, a microphone and eventually speakers so as to notify the user in real-time on a remote control such as a smartphone when a visitor rings at the door of the house. A smart doorbell may enable the user to see and speak with a visitor, even if the user is not at home.

Willing to have a smart doorbell, the user may replace the simple one-button mechanism with the corresponding smart doorbell, as depicted in Figure 2. The smart doorbell is an active electronic device. Therefore, when connected on the electrical circuit, it draws some amount of current which may activate the chime. In other words, the chime may ring even if nobody activates the smart doorbell. This is not appropriate.

The substitution of the simple one-button mechanism with a smart doorbell leads to another problem. The user may not know the range of the power supply of the electrical circuit. If the smart doorbell is not compatible with the voltage of the electrical circuit, it will be damaged. Document US 2018/0278734 A1 discloses a doorbell comprising a mechanism that prevents the chime from ringing all the time.

There is consequently a need for a method for installing a smart doorbell without any electrical knowledge of the electrical circuit enabling the chime to ring only when the smart doorbell is activated and ensuring the compatibility between the smart doorbell and any voltage range of the electrical circuit.

### SUMMARY OF THE INVENTION

The proposed solution to overcome the above-mentioned drawbacks is a controlling device to be connected to the electrical circuit and a method for adapting an electrical circuit with the controlling device, ensuring the compatibility of the electronic device with the electrical circuit.

To this end, the subject of the invention is a controlling device having terminals for connection to an electrical circuit comprising:
- a first user device energized by a first voltage power supply and configured to switch between at least an on-state and an off-state,
- a second user device configured to be connected in series with the first device and energized by a second voltage or current power supply,
the controlling device being configured to be connected in parallel of the first user device and to:
- absorb a leakage current flowing through the electrical circuit below a first predetermined threshold, and
- control the voltage or current between the terminals of the controlling device, so as to ensure that the second user device is supplied with the second voltage or current.

The controlling device according to the invention may comprise a switch, a first leaking device connected in series with the switch, intended to absorb the leakage current below the first predetermined threshold, a controller configured to drive the switch depending on the value of the electric current flowing through the controlling device and/or the voltage between the terminals of the controlling device.

Advantageously, the controlling device comprises a second leaking device connected in parallel of the switch configured to maintain a predetermined leakage current flowing through the electrical circuit.

The controlling device according to the invention may comprise a measuring means configured to measure a value corresponding to the first voltage and a communication link configured to transmit the value to the controller to drive the switch.

The invention also relates to an electrical circuit energized by a first voltage power supply comprising a first user device configured to switch between at least an on-state and an off-state, a second user device configured to be connected in series with the first user device and energized by a second voltage or current power supply, a controlling device intended to be connected in parallel of the first user device and configured to absorb a leakage current below a first predetermined threshold flowing through the electrical circuit, and control the voltage between the terminals of the controlling device, so as to ensure that the second user device is supplied with the second voltage or current between its terminals.

In an embodiment of the invention, the first user device is a chime.

The invention further relates to a method for adapting an electrical circuit energized by a first voltage power supply comprising a first user device configured to switch between at least an on-state and an off-state, the method comprising the steps of:
- switching the power supply of the electrical circuit off,
- connecting a second user device on the electrical circuit in series with the first user device and configured to be energized by a second voltage or current power supply,
- connecting a controlling device in parallel of the first user device, the controlling device being configured to:
   o absorb a leakage current below a first predetermined threshold flowing through the electrical circuit, and
   o control the voltage between the terminals of the controlling device, so as to ensure that the second user device is supplied with the second voltage or current between its terminals,
- adapting the voltage between the terminals of the second user device,
- switching the power supply of the electrical circuit on.

In a realization mode of the invention, the controlling device comprising a switch, a first leaking device connected in series with the switch, intended to absorb the leakage current below the first predetermined threshold, a controller configured to drive the switch depending on the value of the electric current flowing through the controlling device and/or the voltage between the terminals of the controlling device, a communication link to a remote control, the step of adapting the voltage between the terminals of the controlling device comprises the steps of measuring a value corresponding to the first voltage, transmitting the value to the controller to drive the switch.

Advantageously, the step of transmitting the value to the controller comprises the steps of communicating the value to a user, indicating to the user how to configure the controller.

Advantageously, the method further comprises a step of checking the adaptation of the electrical circuit.

Advantageously, the first user device is a chime and the second user device comprises a button configured to be activated so as to make the chime switch in the on-state.

### BRIEF DESCRIPTION OF THE DRAWINGS

The accompanying drawings illustrate various non-limiting, example, innovative aspects in accordance with the present descriptions :
- Figure 1 schematically represents an electrical circuit with a chime of the prior art;
- Figure 2 schematically represents another electrical circuit with a chime of the prior art;
- Figure 3 schematically represents an embodiment of the electrical circuit according to the invention;
- Figure 4 schematically represents an embodiment of the controlling device according to the invention;
- Figure 5 represents a block diagram of the steps of a method for adapting an electrical circuit with a second user device according to the invention.

For the sake of clarity, the same elements have the same references in the various figures.

### DETAILED DESCRIPTION

Although many of the features of this invention are described in relation to a chime, it is understood that they are generally applicable to any two-state device, such as a lamp. Moreover, these features are also applicable to many other devices, for example an alarm device.

**Figure 1** and **Figure 2** schematically represent electrical circuits with a chime of the prior art and were already discussed.

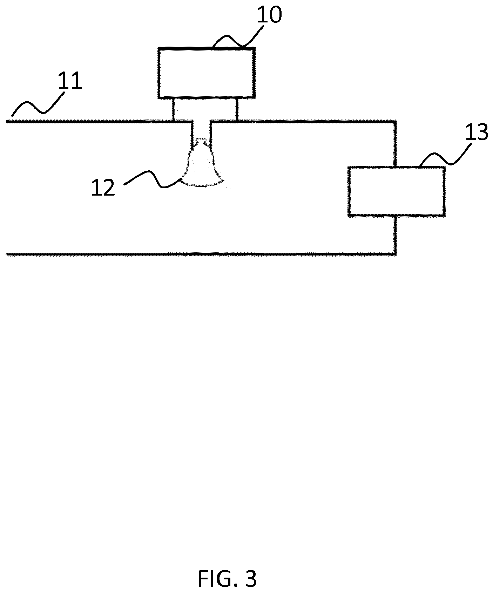

**Figure 3** schematically represents an embodiment of the electrical circuit 11 according to the invention. The electrical circuit 11 is energized by a first voltage power supply and comprises a first user device 12 configured to switch between at least an on-state and an off-state. The first user device 12 may be a chime that switches between an on-state (ringing) and an off-state (silent). It could also be a lamp having two states (lighting and not lighting) or more than two states, for example lighting, not lighting and lighting of various intensity.

The electrical circuit 11 comprises a second user device 13 configured to be connected in series with the first user device 12 and energized by a second voltage or current power supply. The second user device 13 may be any device comprising a button configured to be activated so as to make the first user device 12 switch in the on-state, for example a doorbell. Alternatively, the second user device 13 may comprise a scroll wheel to be manipulated depending on the desired state of the first user device 12.

The electrical circuit 11 further comprises a controlling device 10 intended to be connected in parallel of the first user device 12 and configured to absorb a leakage current below a first predetermined threshold flowing through the electrical circuit 11, and control the voltage between the terminals of the controlling device 10, so as to ensure that the second user device 13 is supplied with the second voltage or current between its terminals.

Below the first predetermined threshold, the current flowing through the electrical circuit 11 is an amount of current drawn due to the connection in series of the second user device 13 (for example the doorbell) which may activate in an undesirable way the first user device 12 (for example the chime). In this case, the controlling device 10 absorbs the current, thus avoiding the first user device 12 to be fed with a small amount of current whereas it should not be. As a consequent, it is ensured that the controlling device 10 absorbs the leakage current flowing through the electrical circuit 11 when the first user device 12 is in its off-state.

Above the first predetermined threshold, the controlling device 10 which is connected in parallel of the first user device 12 controls the voltage between the terminals of the first user device 12 (that is to say between its own terminals). Indeed, there is a first voltage between the terminals of the electrical circuit 11. The second user device 13 should be energized by a second voltage. Since the second user device 13 is connected in series with the controlling device 10, the controlling device 10 itself being connected in parallel with the first user device 12, the voltage between the terminals of the second user device 13 is the difference between the first voltage and the voltage between the terminals of the first user device 12. When controlling the voltage between its terminals, the controlling device 10 ensures that the voltage between the terminals of the second user device 13 stays at the adapted level of the second voltage.

It results that the controlling device 10 absorbs unwanted small currents and adapts the voltage at its terminals to maintain the adapted voltage at the terminals of the second user device 13. Therefore, the second user device 13 is prevented from damages due to electrical incompatibility.

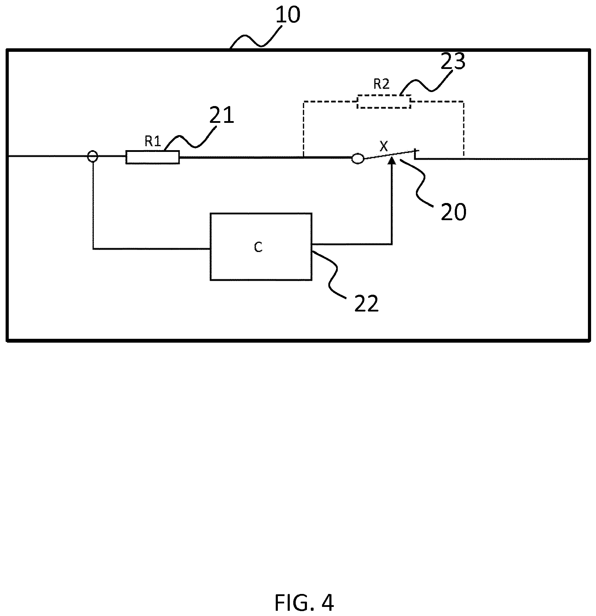

The controlling device 10 is described in more details in Figure 4.

**Figure 4** schematically represents an embodiment of the controlling device 10 according to the invention. As mentioned before, the controlling device 10 according to the invention has terminals for connection to the electrical circuit 11 comprising the first user device 12 and the second user device 13 configured to be connected in series with the first device. The first user device 12 is energized by a first voltage power supply and configured to switch between at least an on-state and an off-state. The second user device 13 is energized by a second voltage or current power supply.

The controlling device 10 is configured to be connected in parallel of the first user device 12 and to absorb a leakage current flowing through the electrical circuit 11 below a first predetermined threshold, and control the voltage or current between the terminals of the controlling device 10, so as to ensure that the second user device 13 is supplied with the second voltage or current.

The principle of the controlling device 10 is to allow a certain amount of electric current to leak as long as this current remains below a certain value. If this current becomes too important then the controlling device 10 opens and the current it lets flowing fall to become relatively low, or almost zero.

In an advantageous embodiment of the invention, the controlling device 10 comprises a switch 20, a first leaking device connected in series with the switch 20, intended to absorb the leakage current below the first predetermined threshold, a controller 22 configured to drive the switch 20 depending on the value of the electric current flowing through the controlling device 10 and/or the voltage between the terminals of the controlling device 10.

The first leaking device 21 may be a resistor, as represented in Figure 4. It can also be a capacitor, an inductor or a PTC (a positive temperature coefficient, which is a resistance with a positive temperature coefficient, that is to say a resistance whose value increases with temperature).

If the controller 22 detects an electric current flowing through the controlling device 10 (and/or the voltage between the terminals of the controlling device 10) which is below the predetermined threshold, it drives the switch 20 from its open position to its closed position. Once the switch 20 is closed, the current flowing through the electrical circuit 11 flows through the controlling device 10. The detected current then flows through the first leaking device 21 that absorbs it. From this, it follows that there is no small amount of current through the electrical circuit 11 anymore.

If the controller 22 detects an electric current flowing through the controlling device 10 (and/or the voltage between the terminals of the controlling device 10) which is above the predetermined threshold, it means that a user activates the second user device 13 (for example by activating the knob of the doorbell). If the switch 20 is in its open position, the controller 22 lets it remain in this open position, since the current has to be directed to the first user device 12. If the switch 20 is in its closed position (and this would be the case if a small amount of current below the predetermined threshold would have been detected just before the user activates the knob of the doorbell), the controller 22 sends a command to the switch 20 to change its position, i.e. the controller 22 drives the switch 20 from its closed position to its open position. The controlling device 10 is then open. No current can circulate through it. Since the controlling device 10 is mounted in parallel to the first user device 12, it follows that the current flowing through the electrical circuit 11 flows through the first user device 12. In the cited example, it results in the ringing of the chime, as desired.

The controller 22 is mainly composed of comparators, amplifiers, transistors and diodes. Its role is to control the switch 20 according to the current that passes into the controlling device 10 or the voltage at its terminals. Measurement of the current or voltage can be made at different points of the circuit depending on the thresholds and the desired sensitivity.

The switch 20 makes it possible to perform the function of closing (flow of the leakage current) and opening (current stop). The switch 20 can take the form of a contact, a relay, one or more transistors or any other switching component (triac, thyristor,...). It may be noted that the swicth 20 is closed by default.

As explained before, the first leaking device 21 enables to limit the leakage current but it can also measure this leakage current.

According to another embodiment of the invention, the controlling device 10 may comprise a second leaking device 23 connected in parallel of the switch 20 configured to maintain a predetermined leakage current flowing through the electrical circuit 11. The second leaking device 23, similarly to the first leaking device 21, may be a resistor, as represented in Figure 4. It can also be a capacitor, an inductor or a PTC. This second leaking device 23 may be useful to determine when switching the switch 20 to its closed position.

According to another embodiment of the invention, the controlling device 10 may comprise a measuring means configured to measure a value corresponding to the first voltage and a communication link configured to transmit the value to the controller 22 to drive the switch 20. The measuring means may be an ammeter, a voltmeter or any adapted multimeter.

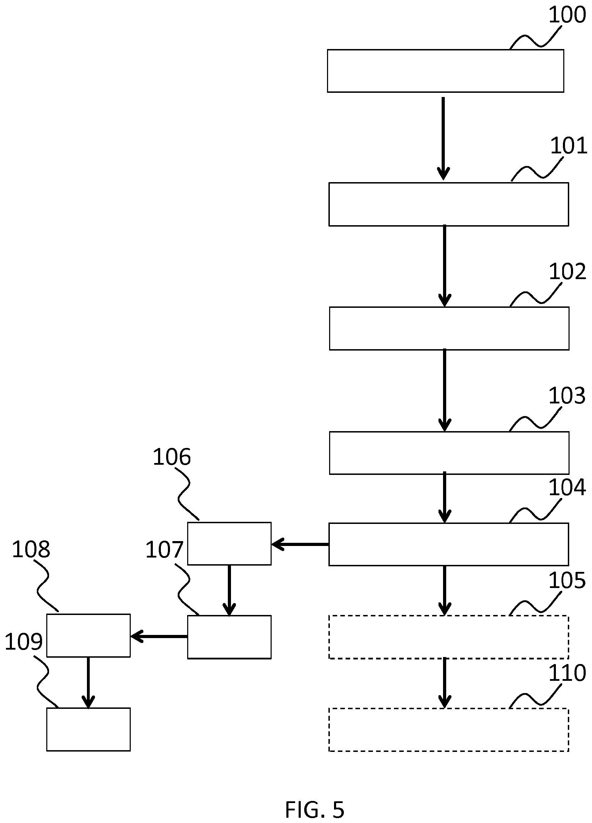

**Figure** 5 represents a block diagram of the steps of a method for adapting an electrical circuit 11 with a second user device 13 according to the invention. The method for adapting an electrical circuit 11 energized by a first voltage power supply comprising a first user device 12 configured to switch between at least an on-state and an off-state, comprises following steps. The first step 100 is the switching of the power supply of the electrical circuit 11 off, if the power supply is not already off. The second step 101 consists in connecting the second user device 13 on the electrical circuit 11 in series with the first user device 12 and configured to be energized by a second voltage or current power supply. In the cited example, this step corresponds to the plugging of the smart doorbell instead of the simple one-button mechanism. The third step 103 of the method according to the invention is the connection of a controlling device 10 in parallel of the first user device 12, the controlling device 10 being configured to absorb a leakage current below a first predetermined threshold flowing through the electrical circuit 11, and control the voltage between the terminals of the controlling device 10, so as to ensure that the second user device 13 is supplied with the second voltage or current between its terminals.

Afterwards it is necessary to perform a fourth step 104 of adapting the voltage between the terminals of the second user device 13. Thanks to this step, it is ensured that the second user device 13 will not undergo any damage due to electrical incompatibility.

Finally, the power supply of the electrical circuit 11 may be switched on (step 105).

When applying the method to the controlling device 10 described before, comprising a switch 20, a first leaking device 21 connected in series with the switch 20, intended to absorb the leakage current below the first predetermined threshold, a controller 22 configured to drive the switch 20 depending on the value of the electric current flowing through the controlling device 10 and/or the voltage between the terminals of the controlling device 10, and a communication link to a remote control, the step 104 of adapting the voltage between the terminals of the controlling device 10 may advantageously comprise the steps of measuring (step 106) a value corresponding to the first voltage and transmitting (step 107) the value to the controller 22 to drive the switch 20.

Therefore, once connected in parallel of the first user device 12, the controlling device 10 adapts itself to the electrical circuit 11 and the components of the circuit, without any technical intervention of the user.

In another realization mode of the invention, the step 107 of transmitting the value to the controller 22 may comprise the steps of communicating the value to the user and indicating to the user how to configure the controller 22. This enables the user to adapt the controller 22 as it should be for the considered electrical circuit and components, without needing any particular knowledge of the circuit and its components.

The method may finally comprise a step 110 of checking the adaptation of the electrical circuit 11.

In the example of the installation of a smart doorbell, the controlling device 10 comprises a communication link to a remote control, such as a smartphone or a smart home device such as a home hub or home controller. The communication link may be performed through a wired or radio connection such as Zigbee, Wi-Fi, NFC, or Bluetooth^{™}. In some embodiments, it is also possible to add a communications module for other RF bands/protocols, and allow the smart doorbell to interact with the communication link via various interfaces, such as the smartphone interface, or via a home gateway that can connect a user via a web application or web interface. The wired or wireless connection enables the smart doorbell to communicate with the user via the smart phone or home hub / controller, or other connected home device, allowing data or information from the smart doorbell to be communicated for the purposes of monitoring or control by the user or home device. For example, the doorbell may comprise a camera, a microphone and speakers so as to notify the user in real-time on a remote control such as a smartphone when a visitor rings at the door of the house, and the communications link will enable this one way or interactive dual functionality of data, voice, or video information. It is to be noted that the user may be notified on other means (not only a remote control). In more detail, the smart doorbell may communicate the live streaming of the connected camera to the user or the smart home hub when a visitor rings at the door. In another embodiment, the smart doorbell may enable a voice or a video communication between the said user and the said visitor.

An easy installation on any home with as little user intervention as possible is described below.

First of all, a physical installation of the wall mount of the smart doorbell and the controlling device is needed. The user switches the power off (step 101), removes the old one-button mechanism from the wall and unscrews the two wires from the old one-button mechanism. Then he drills two holes in the wall if needed. He then screws the wall mount on the wall, then plugs the two wires on the connector of the wall mount (step 102).

The user then plugs the controlling device 10 on the electrical circuit, in parallel of the chime (step 103).

Once the wall mount of the smart doorbell and the controlling device 10 are correctly installed, the user may download a corresponding application on his smartphone, create an account if needed, and select the product (i.e. the smart doorbell) to be installed.

In an advantageous embodiment, the smart doorbell comprises a USB connector. The user may then plug the smart doorbell to a USB power to start the software installation. When the USB is detected, the smart doorbell starts. Through the application, the user can configure the Wi-Fi (or other network used) and its home settings, as described above. It should be appreciated other connectors, both wired and wireless, can be used to transmit power and/or data to enable interaction with the user during setup.

The user is then asked to unplug the doorbell from the USB and go and plug it on the wall mount. During this installation, the smart doorbell is advantageously powered by a built-in battery. In the application, the user is asked to click next when the doorbell is correctly installed on the wall mount.

At this stage, the doorbell detects power, still running on its battery. It may uses an internal AD converter to measure the voltage at the doorbell circuitry. Depending on the measurement, the doorbell sends a message through the network (Wi-Fi,...) to indicate the configuration of the controlling device 10. The controlling device 10 may comprise three positions covering the range of 8 to 230 V: high voltage, low voltage and very low voltage. The controlling device 10 may directly receive the indication from the doorbell to switch to the adapted voltage configuration. Or the application may send a notification to the user to set the controlling device in the correct voltage configuration thanks to a three-position button. It is to be noted that the invention also applies to a controlling device with two positions (high voltage and low voltage), or more than three positions.

Afterwards, a confirmation that the configuration of the controlling device is correct may be optionally send to the user on the application. If the user clicks next (or yes or ok), a message may be sent to the smart doorbell that will allow it to start drawing some current from the electrical circuit 11.

This last step of confirmation is an option. The smart doorbell may start drawing some current from the electrical circuit directly after the controlling device has been given its correct configuration. Nevertheless, the step of confirmation is highly recommended for the sake of the compatibility of the circuitry.

Following this, the smart doorbell is completely configured and fully operational. The smart doorbell is installed without any electrical knowledge of the electrical circuit and it is ensured that the chime rings only when the smart doorbell is activated and the compatibility between the smart doorbell and any voltage range of the electrical circuit is ensured.

The examples disclosed in this specification are therefore only illustrative of some embodiments of the invention and may be combined. They do not in any manner limit the scope of said invention which is defined by the appended claims.

## Claims

1. A controlling device (10) having terminals, the controlling device being configured for connection to an electrical circuit (11), the electrical circuit comprising:
- a first user device (12) having two terminals between which a first voltage is configured to be applied, the first user device (12) being configured to be switched between an on-state and an off-state,
- a second user device (13) configured to be connected in series with the first device (12) and having two terminals between which a second voltage is configured to be applied, the second user device (13) comprising a button configured to be activated so as to make the first user device (12) switch to the on-state;
the controlling device (10) being configured to be connected in parallel with the first user device (12) and comprising a current detector (22) and a switch (20), the controlling device (10) being configured to:
- close the switch (20) to absorb a leakage current flowing through the electrical circuit (11), the leakage current being the current flowing through the electrical circuit (11) when the button of the second user device (13) is not activated, wherein the leakage current is below a first predetermined threshold, and
- open the switch (20) when an electric current flowing through the controlling device (20) is above the predetermined threshold, and
- control the voltage or current between the terminals of the controlling device (10), so as to ensure that the second user device (13) is supplied with the second voltage or current.

2. The controlling device (10) according to claim 1, comprising a second leaking device connected in parallel of the switch configured to maintain a predetermined leakage current flowing through the electrical circuit (11).

3. The controlling device (10) according to claim 1 or 2, comprising a measuring means configured to measure a value corresponding to the first voltage and a communication link configured to transmit the value to the controller to drive the switch.

4. An electrical circuit (11) energized by a first voltage power supply comprising:
- a first user device (12) having two terminals between which the first voltage is configured to be applied, the first user device being configured to be switched between an on-state and an off-state,
- a second user device (13) having two terminals between which a second voltage is configured to be applied, the second user device being configured to be connected in series with the first user device (12) , the second user device (13) comprising a button configured to be activated so as to make the first user device (12) switch to the on-state;
- the controlling device (10) according to one of claims 1 to 3.

5. The electrical circuit (11) according to claim 4, wherein the first user device (12) is a chime.

6. A method for adapting an electrical circuit (11) energized by a first voltage power supply comprising a first user device (12) having two terminals between which the first voltage is configured to be applied, the first user device being configured to be switched between an on-state and an off-state, a current detector (22) and a switch (20),
the method comprising the steps of:
- switching (101) the power supply of the electrical circuit (11) off,
- connecting (102) a second user device (13) on the electrical circuit (11) in series with the first user device (12) and configured to be energized by a second voltage or current power supply, the second user device (13) comprising a buttonconfigured to be activated so as to make the first user device (12) switch to the on-state;
- connecting (103) a controlling device (10) in parallel of the first user device (12), the controlling device being configured to:
o close the switch (20) to absorb a leakage current flowing through the electrical circuit (11), the leakage current being the current flowing through the electrical circuit (11) when the button of the second user device (13) is not activated, wherein the leakage current is below a first predetermined threshold and
o open the switch (20) when an electric current flowing through the controlling device (20) is above the predetermined threshold, and
ocontrol the voltage between the terminals of the controlling device (10), so as to ensure that the second user device (13) is supplied with the second voltage or current between its terminals,
- adapting (104) the voltage between the terminals of the second user device (13) ,
- switching (105) the power supply of the electrical circuit (11) on.
wherein the step of adapting (104) the voltage between the terminals of the controlling device (10) comprises the steps of:
- measuring (106) a value corresponding to the first voltage,
- transmitting (107) the value to the controller (22) to drive the switch (20).

7. The method according to claim 6, wherein the step (107) of transmitting the value to the controller (22) comprises the steps of:
- communicating (108) the value to a user,
- indicating (109) to the user how to configure the controller (22).

8. The method according to one of the preceding claims further comprising a step (110) of checking the adaptation of the electrical circuit (11).

9. The method according to one of the preceding claims, wherein the first user device (12) is a chime and the second user device (13) comprises a button configured to be activated so as to make the chime (12) switch in the on-state.

## Patentansprüche

1. Steuervorrichtung (10), welche Anschlüsse aufweist, wobei die Steuervorrichtung zum Verbinden mit einer elektrischen Schaltung (11) konfiguriert ist, wobei die elektrische Schaltung Folgendes umfasst:
- eine erste Benutzervorrichtung (12), welche zwei Anschlüsse aufweist, zwischen welchen das Anlegen einer ersten Spannung konfiguriert ist, wobei die erste Benutzervorrichtung (12) konfiguriert ist, um zwischen einem Ein-Zustand und einen Aus-Zustand umgeschaltet zu werden,
- eine zweite Benutzervorrichtung (13), welche konfiguriert ist, um mit der ersten Vorrichtung (12) in Reihe geschaltet zu werden und welche zwei Anschlüsse aufweist, zwischen welchen das Anlegen einer zweiten Spannung konfiguriert ist, wobei die zweite Benutzervorrichtung (13) eine Taste umfasst, welche konfiguriert ist, um aktiviert zu werden, um die erste Benutzervorrichtung (12) in den Ein-Zustand umzuschalten;
wobei die Steuervorrichtung (10) konfiguriert ist, um mit der ersten Benutzervorrichtung (12) parallel geschaltet zu sein und welche einen Stromdetektor (22) und einen Schalter (20) umfasst, wobei die Steuervorrichtung (10) konfiguriert ist, zum:
- Schließen des Schalters (20), um einen Leckstrom zu absorbieren, welcher durch die elektrische Schaltung (11) fließt, wobei der Leckstrom der Strom ist, der durch die elektrische Schaltung (11) fließt, wenn die Taste der zweiten Benutzervorrichtung (13) nicht aktiviert ist, wobei der Leckstrom unterhalb einer ersten vorbestimmten Schwelle liegt, und
- Öffnen des Schalters (20), wenn ein elektrischer Strom, welcher durch die Steuervorrichtung (20) fließt, oberhalb der vorbestimmten Schwelle liegt, und
- Steuern der Spannung oder des Stroms zwischen den Anschlüssen der Steuervorrichtung (10), um zu gewährleisten, dass die zweite Benutzervorrichtung (13) mit der zweiten Spannung oder dem zweiten Strom versorgt wird.

2. Steuervorrichtung (10) nach Anspruch 1, umfassend eine zweite Leckvorrichtung, welche mit dem Schalter parallel geschaltet ist, welcher konfiguriert ist, um einen vorbestimmten Leckstrom, der durch die elektrische Schaltung (11) fließt, aufrechtzuerhalten.

3. Steuervorrichtung (10) nach Anspruch 1 oder 2, umfassend ein Messmittel, welches konfiguriert ist, um einen Wert zu messen, welcher der ersten Spannung entspricht, und eine Kommunikationsverbindung, welche konfiguriert ist, um den Wert an die Steuerung zu übertragen, um den Schalter anzusteuern.

4. Elektrische Schaltung (11), welche durch eine erste Spannungsversorgung bestromt wird, umfassend:
- eine erste Benutzervorrichtung (12), welche zwei Anschlüsse aufweist, zwischen welchen das Anlegen einer ersten Spannung konfiguriert ist, wobei die erste Benutzervorrichtung konfiguriert ist, um zwischen einem Ein-Zustand und einen Aus-Zustand umgeschaltet zu werden,
- eine zweite Benutzervorrichtung (13), welche zwei Anschlüsse aufweist, zwischen welchen das Anlegen einer zweiten Spannung konfiguriert ist, wobei die zweite Benutzervorrichtung konfiguriert ist, um mit der ersten Benutzervorrichtung (12) in Reihe geschaltet zu werden, wobei die zweite Benutzervorrichtung (13) eine Taste umfasst, welche konfiguriert ist, um aktiviert zu werden, um die erste Benutzervorrichtung (12) in den Ein-Zustand umzuschalten;
- die Steuervorrichtung (10) nach einem der Ansprüche 1 bis 3.

5. Elektrische Schaltung (11) nach Anspruch 4, wobei die erste Benutzervorrichtung (12) eine Glocke ist.

6. Verfahren zum Anpassen einer elektrischen Schaltung (11), welche durch eine erste Spannungsversorgung bestromt wird, umfassend eine erste Benutzervorrichtung (12), welche zwei Anschlüsse aufweist, zwischen welchen das Anlegen der ersten Spannung konfiguriert ist, wobei die erste Benutzervorrichtung konfiguriert ist, um zwischen einem Ein-Zustand und einem Aus-Zustand umgeschaltet zu werden; einen Stromdetektor (22) und einen Schalter (20),
wobei das Verfahren die folgenden Schritte umfasst:
- Ausschalten (101) der Stromversorgung der elektrischen Schaltung (11),
- Reihenschalten (102) einer zweiten Benutzervorrichtung (13) auf der elektrischen Schaltung (11) mit der ersten Benutzervorrichtung (12) und wobei diese konfiguriert ist, um durch eine zweite Spannungs- oder Stromversorgung bestromt zu werden, wobei die zweite Benutzervorrichtung (13) eine Taste umfasst, welche konfiguriert ist, um aktiviert zu werden, damit die erste Benutzervorrichtung (12) in den Ein-Zustand umgeschaltet wird;
- Parallelschalten (103) einer Steuervorrichtung (10) mit der ersten Benutzervorrichtung (12), wobei die Steuervorrichtung konfiguriert ist, zum:
- Schließen des Schalters (20), um einen Leckstrom zu absorbieren, welcher durch die elektrische Schaltung (11) fließt, wobei der Leckstrom der Strom ist, der durch die elektrische Schaltung (11) fließt, wenn die Taste der zweiten Benutzervorrichtung (13) nicht aktiviert ist, wobei der Leckstrom unterhalb einer ersten vorbestimmten Schwelle liegt, und
- Öffnen des Schalters (20), wenn ein elektrischer Strom, welcher durch die Steuerschaltung (20) fließt, oberhalb der vorbestimmten Schwelle liegt, und
- Steuern der Spannung zwischen den Anschlüssen der Steuervorrichtung (10), um zu gewährleisten, dass die zweite Benutzervorrichtung (13) mit der zweiten Spannung oder dem zweiten Strom zwischen ihren Anschlüssen versorgt wird,
- Anpassen (104) der Spannung zwischen den Anschlüssen der zweiten Benutzervorrichtung (13),
- Einschalten (105) der Stromversorgung der elektrischen Schaltung (11),
wobei der Schritt des Anpassens (104) der Spannung zwischen den Anschlüssen der Steuervorrichtung (10) die folgenden Schritte umfasst:
- Messen (106) eines Werts, welcher der ersten Spannung entspricht,
- Übertragen (107) des Werts an die Steuerung (22), um den Schalter (20) anzusteuern.

7. Verfahren nach Anspruch 6, wobei der Schritt (107) des Übertragens des Werts an die Steuerung (22) die folgenden Schritte umfasst:
- Kommunizieren (108) des Werts an einen Benutzer,
- Anzeigen (109) an den Benutzer, wie die Steuerung (22) zu konfigurieren ist.

8. Verfahren nach einem der vorhergehenden Ansprüche, ferner umfassend einen Schritt (110) des Überprüfens der Anpassung der elektrischen Schaltung (11).

9. Verfahren nach einem der vorhergehenden Ansprüche, wobei die erste Benutzervorrichtung (12) eine Glocke ist und die zweite Benutzervorrichtung (13) eine Taste umfasst, welche konfiguriert ist, um aktiviert zu werden, um die Glocke (12) in den Ein-Zustand umzuschalten.

## Revendications

1. Dispositif de commande (10) comportant des bornes, le dispositif de commande étant configuré pour être connecté à un circuit électrique (11), le circuit électrique comprenant :
- un premier dispositif utilisateur (12) comportant deux bornes entre lesquelles une première tension est configurée pour être appliquée, le premier dispositif utilisateur (12) étant configuré pour être commuté entre un état activé et un état désactivé,
- un deuxième dispositif utilisateur (13) configuré pour être connecté en série avec le premier dispositif (12) et comportant deux bornes entre lesquelles une deuxième tension est configurée pour être appliquée, le deuxième dispositif utilisateur (13) comprenant un bouton configuré pour être actionné de façon à faire basculer le premier dispositif utilisateur (12) dans l'état activé,
le dispositif de commande (10) étant configuré pour être connecté en parallèle avec le premier dispositif utilisateur (12) et comprenant un détecteur de courant (22) et un commutateur (20), le dispositif de commande (10) étant configuré pour :
- fermer le commutateur (20) pour absorber un courant de fuite circulant à travers le circuit électrique (11), le courant de fuite étant le courant circulant à travers le circuit électrique (11) lorsque le bouton du deuxième dispositif utilisateur (13) n'est pas actionné, dans lequel le courant de fuite est inférieur à un premier seuil prédéterminé, et
- ouvrir le commutateur (20) lorsqu'un courant électrique circulant à travers le dispositif de commande (20) est supérieur au seuil prédéterminé, et
- commander la tension ou le courant entre les bornes du dispositif de commande (10), de façon à assurer que le deuxième dispositif utilisateur (13) soit alimenté avec la deuxième tension ou le deuxième courant.

2. Dispositif de commande (10) selon la revendication 1, comprenant un deuxième dispositif de fuite connecté en parallèle au commutateur configuré pour maintenir un courant de fuite prédéterminé circulant à travers le circuit électrique (11)

3. Dispositif de commande (10) selon la revendication 1 ou 2, comprenant un moyen de mesure, configuré pour mesurer une valeur correspondant à la première tension, et une liaison de communication, configurée pour transmettre la valeur au contrôleur pour commander le commutateur.

4. Circuit électrique (11) alimenté par une première alimentation électrique de tension et comprenant :
- un premier dispositif utilisateur (12) comportant deux bornes entre lesquelles la première tension est configurée pour être appliquée, le premier dispositif utilisateur étant configuré pour être commuté entre un état activé et un état désactivé,
- un deuxième dispositif utilisateur (13) comportant deux bornes entre lesquelles une deuxième tension est configurée pour être appliquée, le deuxième dispositif utilisateur étant configuré pour être connecté en série avec le premier dispositif utilisateur (12) le deuxième dispositif utilisateur (13) comprenant un bouton configuré pour être actionné de façon à faire basculer le premier dispositif utilisateur (12) dans l'état activé, et
- le dispositif de commande (10) selon l'une des revendications 1 à 3.

5. Circuit électrique (11) selon la revendication 4, dans lequel le premier dispositif utilisateur (12) est une sonnette.

6. Procédé d'adaptation d'un circuit électrique (11) alimenté par une première alimentation électrique de tension et comprenant un premier dispositif utilisateur (12) comportant deux bornes entre lesquelles la première tension est configurée pour être appliquée, le premier dispositif utilisateur étant configuré pour être commuté entre un état activé et un état désactivé, un détecteur de courant (22) et un commutateur (20),
le procédé comprenant les étapes suivantes :
- coupure (101) de l'alimentation électrique du circuit électrique (11),
- connexion (102) d'un deuxième dispositif utilisateur (13) sur le circuit électrique (11) en série avec le premier dispositif utilisateur (12) et configuré pour être alimenté par une deuxième alimentation électrique en tension ou en courant, le deuxième dispositif utilisateur (13) comprenant un bouton configuré pour être actionné de façon à faire basculer le premier dispositif utilisateur (12) dans l'état activé,
- connexion (103) d'un dispositif de commande (10) en parallèle au premier dispositif utilisateur (12), le dispositif de commande étant configuré pour :
- fermer le commutateur (20) pour absorber un courant de fuite circulant à travers le circuit électrique (11), le courant de fuite étant le courant circulant à travers le circuit électrique (11) lorsque le bouton du deuxième dispositif utilisateur (13) n'est pas actionné, dans lequel le courant de fuite est inférieur à un premier seuil prédéterminé, et
- ouvrir le commutateur (20) lorsqu'un courant électrique circulant à travers le dispositif de commande (20) est supérieur au seuil prédéterminé, et
- commander la tension entre les bornes du dispositif de commande (10), de façon à assurer que le deuxième dispositif utilisateur (13) soit alimenté avec la deuxième tension ou le deuxième courant entre ses bornes,
- adaptation (104) de la tension entre les bornes du deuxième dispositif utilisateur (13),
- mise en tension (105) de l'alimentation électrique du circuit électrique (11),
dans lequel l'étape d'adaptation (104) de la tension entre les bornes du dispositif de commande (10) comprend les étapes suivantes :
- mesure (106) d'une valeur correspondant à la première tension,
- transmission (107) de la valeur au contrôleur (22) pour commander le commutateur (20).

7. Procédé selon la revendication 6, dans lequel l'étape (107) de transmission de la valeur au contrôleur (22) comprend les étapes suivantes :
- communication (108) de la valeur à un utilisateur,
- indication (109) à l'utilisateur de comment configurer le contrôleur (22).

8. Procédé selon l'une des revendications précédentes, comprenant en outre une étape (110) de vérification de l'adaptation du circuit électrique (11).

9. Procédé selon l'une des revendications précédentes, dans lequel le premier dispositif utilisateur (12) est une sonnette et le deuxième dispositif utilisateur (13) comprend un bouton configuré pour être actionné de façon à faire basculer la sonnette (12) dans l'état activé.
